# DEMANDE DE BREVET EUROPEEN

(11) **EP 3 792 898 A1**
(43) Date de publication de la demande: **17.03.2021**
(21) Numéro de dépôt: 20195560.6
(22) Date de dépôt: 10.09.2020
(51) Int. Cl.: G09B 9/00, G09B 9/54, G09B 9/44

(54) **SYSTÈME D'ENTRAINEMENT À UNE MISSION D'AÉRONEF EN VOL ET MÉTHODE D'ENTRAINEMENT ASSOCIÉE**

(30) Priorité: 12.09.2019 FR 1910039
(71) Demandeur: Dassault Aviation, 75008 Paris (FR)
(72) Inventeur: ARLUISON, Eric, 92214 SAINT CLOUD (FR); AUGE, Thomas, 92214 SAINT CLOUD (FR); DE PAUW, Christophe, 33701 MERIGNAC (FR); GUILLON, Emmanuel, 92214 SAINT CLOUD (FR); RIBLIER, William, 92214 SAINT CLOUD (FR)
(74) Mandataire: Lavoix

(57) **Abrégé**

La présente invention concerne un système d'entrainement (10) à une mission d'aéronef comprenant :
- un aéronef (12) comprenant des capteurs (16A-16D) ;
- un module de situation tactique (22) pour afficher une situation tactique comprenant une information représentative d'un signal de mesure réelle d'un des capteurs ; et
- des modules pilotes (20A- 20D), respectivement associé aux capteurs (16A-16D) le module de situation tactique (22) recevant le signal de mesure réelle de chaque capteur par l'intermédiaire du module pilote associé.

Le système d'entrainement (10) comprend un serveur de scénario tactique (18) et un module de simulation (37), pour générer un signal de mesure simulée d'un capteur simulé, le module de situation tactique (22) recevant ledit signal de mesure simulée, par l'intermédiaire du module pilote associé audit capteur, et affichant une information représentative du signal de mesure simulée.

## Description

La présente invention concerne un système d'entrainement à une mission d'aéronef en vol comprenant :
- un aéronef comprenant un écran d'affichage et une pluralité de capteurs, chaque capteur étant configuré pour émettre un signal de mesure réelle dudit capteur ;
- un module de situation tactique configuré pour afficher sur l'écran d'affichage une situation tactique de l'aéronef, la situation tactique comprenant une information représentative du signal de mesure réelle émis par au moins un des capteurs; et
- une pluralité de modules pilotes, chaque module pilote étant associé à un des capteurs et étant configuré pour assurer une communication entre le capteur associé et le module de situation tactique, le module de situation tactique étant configuré pour recevoir le signal de mesure réelle de chaque capteur par l'intermédiaire du module pilote associé audit capteur.

Un tel système est utilisé pour fournir un entrainement au vol à des pilotes d'aéronef, notamment à des pilotes d'aéronefs militaires tels que le « Rafale », par exemple pour des missions en scénarios de guerre.

Afin d'améliorer les scénarios d'entrainement, il est connu, notamment du document US 9 368 043 d'introduire un mode d'entrainement permettant de mixer une situation d'entrainement créée avec des acteurs réels et des données simulées. En particulier, le système décrit dans ce document permet de prendre en compte lors de l'entrainement des acteurs réels, mais aussi des acteurs virtuels, appartenant aux domaines aérien, maritime et terrestre.

Cependant, le mixage entre les données réelles et les données simulées n'est pas toujours adéquat et simple à mettre en œuvre.

Un but de l'invention est donc d'améliorer l'entrainement d'un pilote d'aéronef, sans impacter la sûreté de fonctionnement de l'aéronef et en ayant un impact réduit sur le système d'entrainement.

A cet effet, l'invention a pour objet un système d'entrainement de mission d'aéronef en vol du type précité, caractérisé en ce que le système d'entrainement comprend en outre un serveur de scénario tactique et un module de simulation, le serveur de scénario tactique étant configuré pour commander le module de simulation pour engendrer par simulation un capteur simulé correspondant à au moins un des capteurs et pour générer un signal de mesure simulée du capteur simulé, le module de situation tactique étant configuré pour recevoir ledit signal de mesure simulée, par l'intermédiaire du module pilote associé audit capteur, et pour afficher une information représentative du signal de mesure simulée dans la situation tactique.

Suivant d'autres aspects avantageux de l'invention, le système d'entrainement comporte l'une ou plusieurs des caractéristiques suivantes, prises isolément ou suivant toutes les combinaisons techniquement possibles :
- chaque module pilote est un module nécessaire au capteur associé et au module de situation tactique pour mettre en oeuvre la transmission d'un signal de mesure réel entre le capteur associé et le module de situation tactique ;
- un des capteurs est un capteur radar, une mesure du capteur radar étant une mesure de détection d'un acteur extérieur, une mesure de poursuite de l'acteur extérieur et/ou une mesure de détection d'un brouillage radar dans une zone brouillée ; le module de simulation étant configuré pour engendrer par simulation un capteur radar simulé correspondant au capteur radar ; et, dans lequel :
   - lorsque le module pilote associé au capteur radar reçoit du capteur radar un signal de mesure réelle de détection d'un brouillage radar réel dans une zone brouillée, le module pilote associé au capteur radar est configuré pour empêcher la transmission d'un signal généré par le module de simulation au module de situation tactique, si le signal généré par le module de simulation est un signal de mesure simulée de détection ou de poursuite par le capteur radar simulé d'un acteur simulé présentant une position comprise dans la zone brouillée ; et/ou
   - lorsque le module pilote associé au capteur radar reçoit du module de simulation un signal de mesure simulée de détection d'un brouillage radar simulé dans une zone brouillée par le capteur radar simulé, le module pilote associé au capteur radar est configuré pour empêcher la transmission d'un signal émis par le capteur radar au module de situation tactique, si le signal émis par le capteur est un signal de mesure réelle de détection par le capteur radar d'un acteur réel présentant une position comprise dans la zone brouillée ;
- un des capteurs est un capteur de guerre électronique, une mesure du capteur de guerre électronique étant une mesure de détection et/ou de poursuite d'une arme dirigée vers l'aéronef, le capteur de guerre électronique étant aussi configuré pour commander le lancement d'un leurre en fonction d'un signal de commande de leurre déclenché par un pilote de l'aéronef, le module de simulation étant configuré pour engendrer par simulation un capteur de guerre électronique simulé correspondant au capteur de guerre électronique ; le module de situation tactique étant configuré pour proposer au pilote d'envoyer le signal de commande de leurre, lorsque le module pilote associé au capteur de guerre électronique reçoit un signal de mesure réelle ou simulée de détection d'une arme dirigée vers l'aéronef ; le module pilote associé au capteur de guerre électronique étant configuré pour empêcher la transmission du signal de commande de leurre au capteur de guerre électronique généré en réponse à la proposition d'envoi du signal de commande de leurre, si la mesure de détection de l'arme dirigée vers l'aéronef est une mesure simulée par le module de simulation ;
- un des capteurs est un capteur de guerre électronique, une mesure du capteur de guerre électronique étant une mesure de détection d'une onde électromagnétique radar extérieure dirigée vers l'aéronef, le capteur de guerre électronique étant aussi configuré pour commander le lancement d'un brouillage radar en fonction d'un signal de commande de brouillage radar déclenché par un pilote de l'aéronef, le module de simulation étant configuré pour engendrer par simulation un capteur de guerre électronique simulé correspondant au capteur de guerre électronique ; le module de situation tactique étant configuré pour proposer au pilote d'envoyer le signal de commande de brouillage radar, lorsque le module pilote associé au capteur de guerre électronique reçoit un signal de mesure réelle ou simulée de détection d'onde électromagnétique radar extérieure dirigée vers l'aéronef ; le module pilote associé au capteur de guerre électronique étant configuré pour empêcher la transmission du signal de commande de brouillage radar au capteur de guerre électronique généré en réponse à la proposition d'envoi du signal de commande de brouillage radar, si la mesure de détection de l'onde électromagnétique radar extérieure est une mesure simulée par le module de simulation ;
- les informations de la situation tactique affichée comprennent une pluralité de pistes, chaque piste étant associée à un acteur extérieur poursuivi, chaque piste étant déterminée à partir d'au moins un signal de mesure réelle ou simulée de poursuite d'un des capteurs réels ou simulés, le module pilote dudit capteur réel étant configuré pour transmettre au module de situation tactique chaque signal de mesure réelle ou simulée de poursuite correspondant à des acteurs réels ou simulés différents, ledit capteur réel étant propre à poursuivre un nombre maximal prédéterminé d'acteurs extérieurs seulement, le module pilote dudit capteur réel étant aussi configuré pour arrêter la transmission d'un signal de mesure de poursuite réelle ou simulée, choisi parmi les signaux de poursuite transmis au module de situation tactique par le module pilote, lorsque la somme du nombre des acteurs extérieurs poursuivis par le capteur réel et du nombre des acteurs extérieurs poursuivis par le capteur simulé est égal au nombre maximal prédéterminé et lorsque le module pilote reçoit un signal de mesure réelle ou simulée de poursuite d'un nouvel acteur extérieur, le module pilote étant alors configuré pour transmettre un signal de mesure de poursuite associé au nouvel acteur extérieur poursuivi à la place ;

- ledit module pilote est configuré pour établir une relation d'ordre entre chaque acteur extérieur poursuivi par le capteur réel ou par le capteur simulé, la relation d'ordre étant basée sur un attribut associé à chaque acteur extérieur poursuivi, le signal de mesure de poursuite choisi, dont la transmission est arrêté par le module pilote, étant le signal de mesure de poursuite de l'acteur extérieur qui présente l'attribut d'ordre le plus bas parmi les acteurs poursuivis par le capteur réel ou simulé du module pilote, et qui vérifie en outre une condition prédéterminée d'arrêt de transmission ;
- l'attribut est une information chronologique représentative de l'instant de détection réelle ou simulée de l'acteur extérieur associé ;
- pour chaque acteur extérieur réel ou simulé poursuivi, la condition prédéterminée d'arrêt de transmission est vérifiée si l'acteur extérieur est situé au-delà d'une distance seuil de sécurité par rapport à l'aéronef ;
- les informations de la situation tactique affichée comprennent une pluralité de pistes, chaque piste étant associée à un acteur extérieur détecté et poursuivi par une mesure réelle ou simulée d'un des capteurs réels ou simulés ; ledit capteur présentant une vitesse de balayage, la vitesse de balayage dépendant du nombre d'acteurs extérieurs réels détectés et poursuivis par le capteur ; et le module de situation tactique étant configuré pour afficher chaque piste en fonction d'une vitesse adaptée de balayage associée au capteur, la vitesse adaptée de balayage dépendant du nombre d'acteurs extérieurs réels détectés et poursuivis par ledit capteur et du nombre d'acteurs extérieurs simulés détectés et poursuivis par ledit capteur simulé par le module de simulation ;
- le module pilote associé audit capteur est configuré pour calculer ladite vitesse adaptée de balayage associée au capteur ;
- au moins un des capteurs présente un domaine de balayage, le domaine de balayage étant une zone telle qu'un acteur extérieur disposé en dehors du domaine de balayage ne peut être détecté ou poursuivi par le capteur ; le module pilote associé audit capteur étant configuré pour empêcher la transmission d'un signal généré par le module de simulation au module de situation tactique, si le signal généré par le module de simulation est un signal de mesure simulée de détection ou de poursuite par le capteur simulé d'un acteur simulé présentant une position extérieure au domaine de balayage ;
- au moins un des capteurs présente une direction de visée ; le module de situation tactique étant configuré pour générer un signal de commande de visée du capteur, le signal de commande de visée étant propre à commander une nouvelle direction de visée du capteur ; le module pilote associé au capteur étant configuré pour transmettre le signal de commande de visée audit capteur et au serveur de scénario tactique, le serveur de scénario tactique étant configuré pour commander le module de simulation pour simuler le capteur avec la nouvelle direction de visée ;
- chaque module pilote est configuré pour assurer la cohérence entre un scénario de simulation mis en oeuvre par le serveur de scénario tactique et les mesures réelles des capteurs ;
- chaque module pilote est propre à sélectivement empêcher la transmission du signal de mesure simulé au module de situation tactique.

De plus, l'invention concerne aussi une méthode d'entrainement de mission d'aéronef en vol comprenant les étapes suivantes :
- fourniture d'un système d'entrainement à une mission d'aéronef en vol tel que décrit ci-dessus ; et
- entrainement du pilote, l'étape d'entrainement comprenant les sous-étapes suivantes :
   * d'une part, émission d'un signal de mesure réelle d'au moins un des capteurs du signal par le module de situation tactique par l'intermédiaire du module pilote associé audit capteur, et affichage sur l'écran d'affichage d'une situation tactique de l'aéronef, la situation tactique comprenant une information représentative du signal de mesure réelle dudit capteur ; et
   * d'autre part, simultanément ou séparément des sous-étapes d'émission du signal de mesure réelle, de réception du signal de mesure réelle et d'affichage de la situation tactique, émission d'un signal de mesure simulée du capteur simulé correspondant audit capteur, réception du signal de mesure simulée par le module de situation tactique par l'intermédiaire du même module pilote associé audit capteur, et affichage d'une information représentative du signal de mesure simulée dans la situation tactique.

L'invention sera mieux comprise à la lecture de la description qui va suivre, donnée uniquement à titre d'exemple non limitatif et faite en se référant aux dessins sur lesquels :
[Fig 1] la figure 1 est une vue schématique d'un système d'entrainement selon l'invention ; et
[Fig 2] la figure 2 est un organigramme d'une méthode d'entrainement selon l'invention.

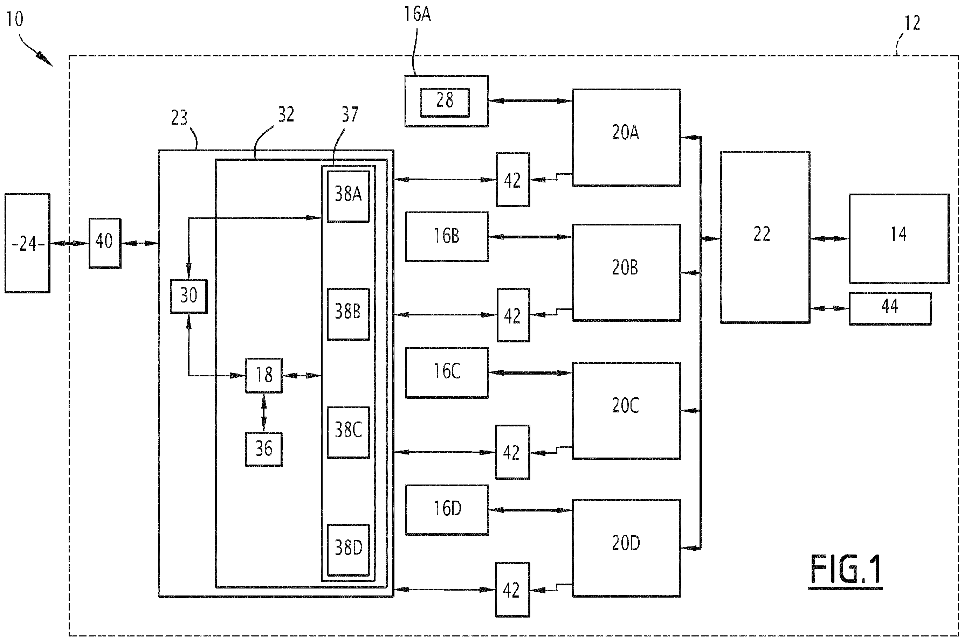

Un système d'entrainement 10 à une mission d'aéronef en vol selon l'invention est illustré sur la figure 1.

Le système d'entrainement 10 comprend un aéronef 12, l'aéronef 12 comprenant un écran d'affichage 14 et une pluralité de capteurs 16A, 16B, 16C, 16D.

Le système d'entrainement 10 comprend aussi un serveur de scénario tactique 18, une pluralité de modules pilotes 20A, 20B, 20C, 20D, chaque module pilote 20A, 20B, 20C, 20D étant respectivement associé à un des capteurs 16A, 16B, 16C, 16D, et un module de situation tactique 22, comme décrit plus en détail par la suite.

Le système d'entrainement 10 comprend par exemple une unité de traitement 23 configurée d'une part pour gérer le serveur de scénario tactique 18 et d'autre part pour simuler les capteurs 16A, 16B, 16C, 16D, comme décrit plus en détail par la suite.

Le système d'entrainement 10 comprend aussi par exemple un système externe 24 propre à communiquer avec l'unité de traitement 23, et en particulier avec le serveur de scénario tactique 18.

Le système d'entrainement 10 peut être interfacé avec un programme de vol opérationnel, exécuté sur un ordinateur de mission.

Le système d'entrainement 10 comprend aussi une ou une pluralité de mémoire(s) stockant les modules décrits ci-après, et un ou une pluralité de processeur(s) propre(s) à exécuter les modules.

Dans l'exemple de réalisation de l'invention, le serveur de scénario tactique 18 et lesdits modules décrits par la suite sont réalisés sous forme de logiciels stockés dans la ou les mémoire(s) et aptes à être exécutés par le ou les processeur(s). En variante, les modules sont réalisés au moins partiellement sous forme de composants logiques programmables, ou encore sous forme de circuits intégrés dédiés, inclus dans le système d'entrainement 10.

En particulier, le système d'entrainement 10 peut être partitionné, soit physiquement partitionné, soit partitionné sous forme de partition logicielle.

L'aéronef 12 comprend typiquement un cockpit.

L'écran d'affichage 14 est propre à être vu par un pilote de l'aéronef 12.

L'écran d'affichage 14 est en particulier disposé dans le cockpit de l'aéronef 12.

Chaque capteur 16A, 16B, 16C, 16D est configuré pour émettre un signal de mesure réelle dudit capteur.

Par « mesure réelle », on entend une mesure faite en utilisant le capteur. En particulier, lors de l'acquisition de la mesure réelle, le capteur fonctionne.

Bien que seulement quatre capteurs différents sont décrits ici, ce nombre exact et la nature de ces capteurs ne sont pas limitants.

Un des capteurs est par exemple un capteur radar 16A.

En particulier, le capteur radar 16A comprend un ensemble 28 d'antennes d'émission d'une onde électromagnétique et de réception d'une onde électromagnétique réfléchie.

Le capteur radar 16A est configuré pour détecter un acteur extérieur, pour poursuivre l'acteur extérieur et/ou pour détecter un brouillage radar. Par « poursuivre l'acteur extérieur », on entend que le capteur radar 16A est configuré pour mesurer une position et/ou une vitesse de l'acteur extérieur, notamment à intervalles de temps réguliers au cours du temps.

Ainsi, une mesure du capteur radar 16A est une mesure de détection de l'acteur extérieur, une mesure de poursuite de l'acteur extérieur et/ou une mesure de détection du brouillage radar dans une zone brouillée. Par « une mesure de poursuite », on entend une mesure de la position et/ou de la vitesse de l'acteur extérieur.

Le capteur radar 16A est par exemple propre à détecter le brouillage radar en analysant une onde réfléchie provenant de la zone brouillée.

Le capteur radar 16A présente une direction de visée.

De plus, le capteur radar 16A présente un domaine de balayage.

Le domaine de balayage est une zone telle qu'un acteur extérieur disposé en dehors du domaine de balayage ne peut être détecté ou poursuivi par le capteur radar 16A.

Le domaine de balayage est par exemple centré sur la direction de visée.

En outre, le capteur radar 16A présente une vitesse de balayage.

La vitesse de balayage est notamment la vitesse à laquelle le capteur balaie le domaine de balayage.

La vitesse de balayage dépend du nombre d'acteurs extérieurs réels détectés et poursuivis par le capteur radar 16A.

De plus, un des capteurs est par exemple un capteur optronique 16D.

Le capteur optronique 16D est configuré pour détecter un acteur extérieur et pour poursuivre l'acteur extérieur.

Ainsi, une mesure du capteur optronique 16D est une mesure de détection de l'acteur extérieur et/ou une mesure de poursuite de l'acteur extérieur.

Pour cela, le capteur optronique 16D est par exemple configuré pour mettre en oeuvre une veille dans le domaine infrarouge.

Le capteur optronique 16D présente une direction de visée.

De plus, le capteur optronique 16D présente un domaine de balayage.

Le domaine de balayage du capteur optronique 16D est par exemple centré sur la direction de visée du capteur optronique 16D.

En outre, le capteur optronique 16D présente une vitesse de balayage.

La vitesse de balayage du capteur optronique 16D dépend du nombre d'acteurs extérieurs réels détectés et poursuivis par le capteur optronique 16D.

Dans le mode de réalisation décrit, seuls le capteur radar 16A et le capteur optronique 16D présentent une direction de visée, un domaine de balayage, et une vitesse de balayage. Cependant, d'autres capteurs de l'aéronef 12 distincts de ceux décrits précisément ici peuvent présenter une direction de visée, un domaine de balayage, et une vitesse de balayage.

Chaque capteur 16A, 16D qui présente une direction de visée est de préférence configuré pour changer la direction de visée en fonction d'un signal de commande de visée, par exemple généré par le module de situation tactique 22. En particulier, le signal de commande de visée est propre à commander une nouvelle direction de visée du capteur 16A, 16D.

De plus, un des capteurs est par exemple un premier capteur de guerre électronique 16B.

Le premier capteur de guerre électronique 16B est configuré pour détecter et poursuivre une arme dirigée vers l'aéronef 12.

Ainsi, une mesure du premier capteur de guerre électronique 16B est une mesure de détection et/ou une mesure de poursuite d'une arme dirigée vers l'aéronef 12.

L'arme dirigée vers l'aéronef 12 est par exemple un missile.

Le premier capteur de guerre électronique 16B est par exemple apte à détecter et poursuivre dans le domaine infrarouge.

Le premier capteur de guerre électronique 16B est aussi configuré pour commander le lancement d'un leurre en fonction d'un signal de commande de leurre déclenché par un pilote de l'aéronef 12.

Le leurre est un système consommable propre à tromper l'arme dirigée vers l'aéronef 12, par exemple pour détourner l'arme et la rediriger sur le leurre.

Des exemples de leurres sont connus de l'homme du métier et ne seront pas décrits plus en détail ici.

L'aéronef 12 comprend un nombre de leurres disponibles prédéterminé, le premier capteur de guerre électronique 16B étant configuré pour calculer le nombre de leurres disponibles prédéterminé.

En particulier, à chaque lancement réel d'un ou de leurre(s), le nombre de leurres disponibles prédéterminé est décompté du nombre de leurre(s) lancé(s).

En outre, un des capteurs 16A, 16B, 16C, 16D est par exemple un deuxième capteur 16C de guerre électronique.

Le deuxième capteur 16C de guerre électronique est configuré pour détecter une onde électromagnétique radar extérieure dirigée vers l'aéronef 12.

Ainsi, une mesure du deuxième capteur 16C de guerre électronique est une mesure de détection d'une onde électromagnétique radar extérieure dirigée vers l'aéronef 12.

L'onde électromagnétique radar extérieure provient par exemple d'un système radar extérieur, qui équipe par exemple une structure ou un aéronef extérieur(e).

Le deuxième capteur 16C de guerre électronique est aussi configuré pour commander le lancement d'un brouillage radar en fonction d'un signal de commande de brouillage radar déclenché par un pilote de l'aéronef 12.

Le lancement du brouillage radar comprend par exemple l'émission d'une onde électromagnétique propre à décevoir l'onde électromagnétique radar extérieure, de sorte que l'aéronef 12 ne puisse plus être distingué par le système radar extérieur à partir de l'onde électromagnétique radar extérieure.

Des exemples de brouillages radar sont connus de l'homme du métier et ne seront pas décrits plus en détail ici.

L'aéronef 12 comprend en complément d'autres types de capteurs que ceux décrits ci-dessus.

L'unité de traitement 23 est par exemple embarquée dans l'aéronef 12.

L'unité de traitement 23 comprend un processeur 30 et une mémoire 32.

La mémoire 32 contient le serveur de scénario tactique 18 et une base de données 36.

Le serveur de scénario tactique 18 est un module propre à être exécuté par le processeur 30.

La base de données 36 comprend des scénarios de simulation propres à être mise en oeuvre par le module 34 de gestion.

Le serveur de scénario tactique 18 est configuré pour communiquer avec la base de données 36 pour mettre en oeuvre au moins un des scénarios de simulation.

Chaque scénario comprend une pluralité d'acteurs extérieurs simulés, et une trajectoire prédéterminée pour chaque acteur extérieur simulé.

Au moins un des acteurs extérieurs simulés est propre à émettre un brouillage radar simulé et/ou à émettre une onde électromagnétique radar extérieure simulée.

Ici et par la suite, les termes « élément simulé » sont définis comme un élément représentant un élément réel. Les éléments simulés peuvent être regroupés en deux types, les éléments virtuels qui sont des simulations générées par un opérateur par l'intermédiaire d'une machine et les éléments construits qui sont des simulations entièrement générées par une machine.

Les acteurs extérieurs simulés sont par exemple des aéronefs simulés, et/ou des plateformes navales simulées, et/ou des véhicules terrestres simulés, et/ou des structures terrestres simulés.

De plus, la mémoire 32 contient aussi un module de simulation 37 configuré pour engendrer par simulation un capteur simulé 38A, 38B, 38C, 38D correspondant à au moins un des capteurs 16A, 16B, 16C, 16D. En variante, le module de simulation 37 est contenu dans une mémoire distincte de celle contenant le serveur de scénario tactique 18.

Le serveur de scénario tactique 18 est configuré pour commander le module de simulation 37 en fonction du ou de chaque scénario de simulation mis en œuvre.

De préférence, le module de simulation 37 est configuré pour engendrer par simulation un capteur simulé 38A, 38B, 38C, 38D correspondant à chaque capteur 16A, 16B, 16C, 16D de l'aéronef 12.

Ces capteurs simulés 38A, 38B, 38C, 38D sont ici stockés dans la mémoire 32.

Le module de simulation 37 est aussi configuré pour générer un signal de mesure simulée de chaque capteur simulé 38A, 38B, 38C, 38D. Par opposition aux termes « mesure réelle », le capteur réel 16A, 16B, 16C, 16D associé ne fonctionne pas pour générer la mesure simulée.

Plus précisément, le module de simulation 37 est propre à engendrer par simulation au moins un capteur radar simulé 38A correspondant au capteur radar 16A décrit ci-dessus, au moins un capteur optronique 38D correspondant au capteur optronique 16D, au moins un premier capteur de guerre électronique simulé 38B correspondant au premier capteur de guerre électronique 16B et au moins un deuxième capteur de guerre électronique simulé 38C correspondant au deuxième capteur 16C de guerre électronique.

Le serveur de scénario tactique 18 est par exemple configuré pour communiquer avec le système externe 24 par l'intermédiaire d'une passerelle de communication 40.

Le système externe 24 est externe à l'aéronef 12.

Il est par exemple disposé au sol.

Le système externe 24 est propre à envoyer des instructions de mise en œuvre d'un scénario de simulation, au serveur de scénario tactique 18, par exemple choisi parmi les scénarios de simulation stockés dans la base de données 36.

Le système externe 24 est aussi propre à envoyer des instructions de simulation au serveur de scénario tactique 18, le serveur de scénario tactique 18 commandant en conséquence le module de simulation 37. Ainsi, le système externe 24 est propre à commander à distance le module de simulation 37 pour qu'il génère un signal de mesure simulé d'un des capteurs simulés 38A, 38B, 38C, 38D. Les instructions de simulation du système externe 24 sont alors distinctes d'un des scénarios de simulation de la base de données 36.

Le système externe 24 est par exemple commandé par un opérateur.

Chaque module pilote 20A, 20B, 20C, 20D est respectivement configuré pour assurer une communication entre le capteur associé 16A, 16B, 16C, 16D et le module de situation tactique 22.

Plus précisément, chaque module pilote 20A, 20B, 20C, 20D est le module permettant au capteur associé 16A, 16B, 16C, 16D et au module de situation tactique 22 d'interagir ensemble.

Chaque module pilote 20A, 20B, 20C, 20D est un module nécessaire au capteur associé 16A, 16B, 16C, 16D et au module de situation tactique 22 pour mettre en œuvre la transmission d'un signal de mesure réel entre le capteur associé et le module de situation tactique 22.

En d'autres termes, sans le module pilote, le capteur associé ne peut interagir avec le module de situation tactique 22.

En particulier, chaque module pilote 20A, 20B, 20C, 20D est propre à transmettre les données du capteur associé au module de situation tactique 22 pour permettre l'affichage, par ce module 22, d'au moins une piste de détection d'un acteur détecté et poursuivi par le capteur.

Ainsi, pour chaque capteur 16A, 16B, 16C, 16D, le module pilote associé est connecté au capteur et au module de situation tactique 22, en étant interposé entre le capteur associé et le module de situation tactique 22.

Le module de situation tactique 22 ne reçoit donc un signal de mesure réel provenant du capteur 16A, 16B, 16C, 16D que par le module pilote associé 20A, 20B, 20C, 20D.

De plus, pour chaque capteur 16A, 16B, 16C, 16D, le module pilote associé 20A, 20B, 20C, 20D est connecté à l'unité de traitement 23 et au module de situation tactique 22, en étant interposé entre l'unité de traitement 23 et le module de situation tactique 22.

Ainsi, pour chaque capteur 16A, 16B, 16C, 16D, le module pilote associé 20A, 20B, 20C, 20D respectif est configuré pour recevoir le signal de mesure simulée respectif du capteur simulé 38A, 38B, 38C, 38D par le module de simulation 37.

Pour chaque capteur 16A, 16B, 16C, 16D, tout signal de mesure simulé par le module de simulation 37 est envoyé au module de situation tactique 22 uniquement par l'intermédiaire du module pilote 20A, 20B, 20C, 20D associé au capteur simulé 38A, 38B, 38C, 38D.

En d'autres termes, pour chaque capteur simulé 38A, 38B, 38C, 38D, le module de simulation 37 n'envoie le signal de mesure simulé au module de situation tactique 22 que par l'intermédiaire du module pilote 20A, 20B, 20C, 20D associé au capteur simulé.

Grâce à cette architecture, il est possible de mixer des données réelles avec des données simulées sans entrainer une requalification des capteurs et des autres fonctions du système d'entrainement 10.

L'ensemble des composants du système d'entrainement peuvent donc évoluer sans impacter le reste du système.

De plus, comme détaillé par la suite, il est possible de choisir la manière d'afficher les mesures réelles et les mesures virtuelles pour les différencier ou non. Dans le cas où il n'y a pas de différenciation dans l'affichage des mesures réelles et virtuelles, le pilote de l'aéronef 12 n'est pas en mesure de distinguer si les mesures sont réelles ou simulées.

Dans un mode de réalisation avantageux de l'invention, chaque module pilote 20A, 20B, 20C, 20D est configuré pour assurer la cohérence entre le scénario de simulation mis en œuvre par le serveur de scénario tactique 18 et les mesures réelles des capteurs 16A, 16B, 16C, 16D.

Ainsi, le module pilote 20A associé au capteur radar 16A est configuré pour empêcher la transmission d'un signal généré par le module de simulation 37 au module de situation tactique 22, si le signal généré par le module de simulation 37 est un signal de mesure simulée de détection ou de poursuite par le capteur simulé d'un acteur simulé présentant une position extérieure au domaine de balayage du capteur radar 16A.

De plus, dans un mode de réalisation préféré de l'invention, lorsque le module pilote 20A associé au capteur radar 16A reçoit du capteur radar 16A un signal de mesure réelle de détection d'un brouillage radar réel dans une zone brouillée, le module pilote 20A associé au capteur radar 16A est configuré pour empêcher la transmission d'un signal généré par le module de simulation 37 au module de situation tactique 22, si le signal généré par le module de simulation 37 est un signal de mesure simulée de détection par le capteur radar simulé d'un acteur simulé présentant une position comprise dans la zone brouillée.

En outre, lorsque le module pilote 20A associé au capteur radar 16A reçoit du module de simulation 37 un signal de mesure simulée de détection d'un brouillage radar simulé dans une zone brouillée par le capteur radar simulé, le module pilote 20A associé au capteur radar 16A est configuré pour empêcher la transmission d'un signal émis par le capteur radar 16A au module de situation tactique 22, si le signal émis par le capteur radar 16A est un signal de mesure réelle de détection par le capteur radar 16A d'un acteur réel présentant une position comprise dans la zone brouillée.

Ainsi, la cohérence de l'entrainement est améliorée.

Pour chaque capteur 16A, 16D qui présente une direction de visée, le module pilote associé 20A, 20D est configuré pour transmettre le signal de commande de visée, par exemple généré par le module de situation tactique 22, à la fois au capteur 16A, 16D et au serveur de scénario tactique 18.

Le serveur de scénario tactique 18 est alors configuré pour commander le module de simulation 37 pour simuler le capteur 16A, 16D avec la nouvelle direction de visée.

De préférence, pour chaque module pilote 20A, 20B, 20C, 20D, un module de sécurité 42 est respectivement interposé entre l'unité de traitement 23 et le module pilote 20A, 20B, 20C, 20D.

Le module de sécurité 42 est configuré pour empêcher une intrusion non autorisée dans chaque module pilote 20A, 20B, 20C, 20D, en particulier dans des phases hors entrainement de l'aéronef, typiquement en cas de mission de guerre de l'aéronef.

Le module de situation tactique 22 (ou « SITAC ») est connecté à l'écran d'affichage 14.

Le module de situation tactique 22 est par exemple configuré pour générer des images et une interface graphique sur l'écran d'affichage 14, et pour gérer cette interface graphique.

Le module de situation tactique 22 est propre à générer une représentation de l'interface graphique et à mettre à jour cette interface graphique en réponse à des mesures réelles ou simulées provenant des capteurs réels 16A, 16B, 16C, 16D ou des capteurs simulés 38A, 38B, 38C, 38D.

Le module de situation tactique 22 est configuré pour recevoir des commandes du pilote de l'aéronef 12 via des moyens de saisie 44 typiquement, notamment des boutons logiciels ou réels, ou encore des organes de commande.

Le module de situation tactique 22 est configuré pour mettre à jour l'interface graphique en réponse à des commandes du pilote via les moyens de saisie 44.

Le module de situation tactique 22 est configuré pour afficher sur l'écran d'affichage 14 une situation tactique de l'aéronef 12, la situation tactique comprenant une information représentative du signal de mesure réelle émis par au moins un des capteurs 16A, 16B, 16C, 16D.

Pour cela, le module de situation tactique 22 est configuré pour recevoir chaque signal de mesure réelle de chaque capteur 16A, 16B, 16C, 16D, par l'intermédiaire du module pilote 20A, 20B, 20C, 20D associé audit capteur.

Le module de situation tactique 22 est aussi configuré pour recevoir chaque signal de mesure simulée, par l'intermédiaire du module pilote 20A, 20B, 20C, 20D associé audit capteur 38A, 38B, 38C, 38D , et pour afficher une information représentative du signal de mesure simulée dans la situation tactique.

La situation tactique affichée permet au pilote de l'aéronef 12 d'apprécier la situation en cours, notamment en termes d'acteurs extérieurs présents autour du pilote.

Les acteurs extérieurs sont par exemple des aéronefs, et/ou des plateformes navales, et/ou des véhicules terrestres, et/ou des structures terrestres.

Les informations de la situation tactique affichée sont déterminées par le module de situation tactique 22 à partir d'au moins une mesure réelle ou simulée d'un des capteurs réels et simulés.

Avantageusement, au moins une des informations de la situation tactique affichée, par exemple une piste comme décrit par la suite, est déterminée par le module de situation tactique 22 à partir de mesures réelles et/ou simulées d'au moins deux capteurs différents réels ou simulés.

En d'autres termes, au moins une des informations de la situation tactique affichée, par exemple une piste comme décrit par la suite, est déterminée par le module de situation tactique 22 à partir de signaux de mesure provenant d'au moins deux modules pilotes différents, avantageusement de plus de deux modules pilotes différents.

Ainsi, le module de situation tactique 22 est configuré pour fusionner les mesures des capteurs, qu'elles soient réelles ou simulées, afin de fournir les informations les plus complètes et les plus appropriées au pilote. Des capteurs différents permettent d'enrichir une même information affichée au pilote.

Les informations de la situation tactique affichée comprennent une pluralité de pistes, chaque piste étant associée à un acteur extérieur détecté et poursuivi par une mesure réelle ou simulée d'au moins un des capteurs réels 16A, 16B, 16C, 16D ou simulés 38A, 38B, 38C, 38D.

Chaque piste est déterminée par le module de situation tactique 22 et est représentative de la position sur le terrain de l'acteur réel ou simulé.

Chaque piste est ainsi déterminée par le module de situation tactique 22 à partir d'au moins un signal de mesure de poursuite d'un des capteurs réel ou simulé.

En particulier, tout ou partie de ces pistes sont associées à des acteurs extérieurs détectés et poursuivis par une mesure réelle ou simulée du capteur radar réel 16A ou simulé 38A ou du capteur optronique réel 16D ou simulé 38D.

De préférence, au moins une piste est déterminée par le module de situation tactique 22 à partir à la fois d'une mesure réelle ou simulée du capteur radar réel 16A ou simulé 38A et d'une mesure réelle ou simulée du capteur optronique réel 16D ou simulé 38D.

Le module de situation tactique 22 est configuré pour afficher chaque piste avec une précision de positionnement prédéterminée.

De plus, le module de situation tactique 22 est configuré pour afficher chaque piste avec une fréquence de rafraichissement prédéterminée.

La situation tactique affichée est mise à jour en fonction des signaux de mesures réelles ou simulées reçus par le module de situation tactique 22.

Chaque capteur réel 16A, 16D est propre à poursuivre un nombre maximal prédéterminé d'acteurs extérieurs seulement.

Ce nombre maximal prédéterminé est notamment une limite de fabrication du capteur réel 16A, 16D.

Chaque module pilote 20A, 20D est configuré pour transmettre au module de situation tactique 22 chaque signal de mesure réelle ou simulée de poursuite correspondant à des acteurs réels ou simulés différents.

De plus, dans un mode de réalisation avantageux de l'invention, chaque module pilote 20A, 20D est configuré pour arrêter la transmission d'un signal de mesure de poursuite réelle ou simulée choisi parmi les signaux de poursuite transmis au module 22 par le module pilote, lorsque la somme du nombre des acteurs extérieurs poursuivis par le capteur réel 16A, 16D et du nombre des acteurs extérieurs poursuivis par le capteur simulé 38A, 38D est égal au nombre maximal prédéterminé et lorsque le module pilote reçoit un signal de mesure réelle ou simulée de poursuite d'un nouvel acteur extérieur.

Le module pilote 20A, 20D est alors configuré pour transmettre un signal de mesure de poursuite associé au nouvel acteur extérieur détecté et poursuivi à la place.

Chaque module pilote 20A, 20D assure ainsi la cohérence des informations affichées au pilote de l'aéronef 12, notamment en respectant les capacités du capteur réel 16A, 16D du point de vue du nombre maximal d'acteurs qui peuvent normalement être poursuivis par ce capteur. En d'autres termes, malgré la génération de pistes simulées, qui ne sont donc pas poursuivies par le capteur réel, le nombre de pistes provenant du module pilote n'est pas supérieur au nombre de pistes maximal que peut suivre le capteur réel en temps normal.

Ainsi, le pilote de l'aéronef 12 percevra une situation tactique cohérente du point de vue des capacités du capteur réel.

Pour cela, chaque module pilote 20A, 20D est configuré pour établir une relation d'ordre entre chaque acteur extérieur poursuivi par le capteur réel 16A, 16D ou par le capteur simulé 38A, 38D, basée sur un attribut associé à chaque acteur extérieur poursuivi.

Avantageusement, le signal de mesure de poursuite choisi, dont la transmission est arrêté par le module pilote 20A, 20D, est par exemple le signal de mesure de poursuite de l'acteur extérieur qui présente l'attribut d'ordre le plus bas parmi les acteurs poursuivis par le capteur réel 16A, 16D ou simulé 38A, 38D du module pilote, et qui vérifie en outre une condition prédéterminée d'arrêt de transmission.

Par exemple, l'attribut est une information chronologique représentative de l'instant de détection réelle ou simulée de l'acteur extérieur associé.

Un tel choix d'attribut est par exemple approprié pour le module pilote 20A du capteur radar 16A.

L'attribut est par exemple différent pour au moins un autre des modules pilotes.

Dans le cas où l'attribut est une information chronologique représentative de l'instant de détection, l'attribut qui présente l'ordre le plus bas est l'information chronologique la plus ancienne.

Avantageusement, pour chaque acteur extérieur poursuivi, la condition prédéterminée d'arrêt de transmission de l'acteur extérieur poursuivi est vérifiée si l'acteur extérieur est situé au-delà d'une distance seuil de sécurité par rapport à l'aéronef 12.

La distance seuil de sécurité est par exemple déterminée en fonction d'une vitesse de rapprochement estimée de l'acteur extérieur vers l'aéronef 12.

Ainsi, l'affichage, dans la situation tactique, des pistes sensibles associées à des acteurs extérieurs proches est maintenu.

Dans un mode de réalisation avantageux de l'invention, pour au moins un capteur présentant une vitesse de balayage, par exemple pour le capteur radar 16A ou optronique 16D, le module de situation tactique 22 est aussi configuré pour afficher chaque piste détectée et poursuivie par ce capteur réel ou simulé en fonction d'une vitesse adaptée de balayage associée au capteur.

La vitesse adaptée de balayage est par exemple distincte de la vitesse de balayage du capteur.

La vitesse adaptée de balayage est calculée en fonction du nombre d'acteurs extérieurs réels détectés et poursuivis par ledit capteur et du nombre d'acteurs extérieurs simulés détectés et poursuivis par ledit capteur simulé par le module de simulation 37.

Le module pilote 20A, 20D associé au capteur 16A, 16D est configuré pour calculer ladite vitesse adaptée de balayage associée au capteur.

De préférence, le module pilote 20B associé au premier capteur de guerre électronique 16B est configuré pour empêcher des actions réelles dont le déclenchement est souhaité par le pilote en réponse à des données simulées.

Le module de situation tactique 22 est par exemple configuré pour afficher le nombre de leurres disponibles en cours.

En particulier, le module de situation tactique 22 est configuré pour proposer au pilote d'envoyer un signal de commande de leurre, lorsque le module pilote 20B associé au premier capteur de guerre électronique 16B reçoit un signal de mesure réelle ou simulée de détection d'une arme dirigée vers l'aéronef 12.

Cette proposition au pilote est notamment faite par l'affichage d'un pictogramme et/ou d'un message associé(s) sur l'écran d'affichage.

Les moyens de saisie 44 sont configurés pour recevoir la réponse du pilote à la proposition.

Le module de situation tactique 22 est alors configuré pour générer le signal de commande de leurre en fonction de la réponse. En particulier, aucun signal de commande de leurre n'est généré si le pilote ne commande pas l'envoi d'un leurre suite à la proposition.

Alors, le module pilote 20B associé au premier capteur de guerre électronique 16B est configuré pour empêcher la transmission du signal de commande de leurre au premier capteur de guerre électronique 16B généré en réponse à la proposition d'envoi du signal de commande de leurre, si la mesure de détection de l'arme dirigée vers l'aéronef 12 est une mesure simulée par le module de simulation 37.

Aucun leurre réel n'est donc lancé si la mesure de détection de l'arme dirigée vers l'aéronef 12 est une mesure simulée par le module de simulation 37.

De plus, le premier capteur de guerre électronique 16B est alors configuré pour ne décompter aucun leurre du nombre de leurres disponibles.

Le module pilote 20B associé au premier capteur de guerre électronique 16B est néanmoins configuré pour transmettre le signal de commande de leurre au serveur de scénario tactique 18.

Le serveur de scénario tactique 18 est alors configuré pour prendre en compte le signal de commande de leurre dans la simulation du premier capteur de guerre électronique 16B par le module de simulation 37.

En particulier, le serveur de scénario tactique 18 est configuré pour commander le module de simulation 37 pour simuler le lancement d'un leurre, en fonction dudit signal de commande, ainsi que les effets d'un tel lancement sur l'arme simulée dirigée vers l'aéronef 12.

Par exemple, le module de simulation 37 est configuré pour simuler, dans un cas où le lancement du leurre simulé est qualifié d'efficace, un changement de direction de l'arme simulée dirigée vers l'aéronef 12 vers le leurre simulé.

Notamment, dans le cas où le leurre simulé est efficace, le module de simulation 37 est alors configuré pour arrêter la mesure simulée de détection de l'arme dirigée vers l'aéronef 12. Alternativement, dans le cas où le leurre simulé n'est pas efficace, le module de simulation 37 est configuré pour maintenir la mesure simulée de détection de l'arme dirigée vers l'aéronef 12.

Avantageusement, le module pilote 20C associé au deuxième capteur 16C de guerre électronique est configuré pour empêcher des actions réelles dont le déclenchement est souhaité par le pilote en réponse à des données simulées.

En particulier, le module de situation tactique 22 est configuré pour proposer au pilote d'envoyer un signal de commande de brouillage radar, lorsque le module pilote 20C associé au deuxième capteur 16C de guerre électronique reçoit un signal de mesure réelle ou simulée de détection d'onde électromagnétique radar extérieure dirigée vers l'aéronef 12.

Cette proposition au pilote est notamment faite par l'affichage d'un pictogramme et/ou d'un message associé(s) sur l'écran d'affichage.

Les moyens de saisie 44 sont configurés pour recevoir la réponse du pilote à la proposition.

Le module de situation tactique 22 est alors configuré pour générer le signal de commande de brouillage radar en fonction de la réponse. En particulier, aucun signal de commande de brouillage radar n'est généré si le pilote ne commande pas l'envoi d'un brouillage radar suite à la proposition.

Le module pilote 20C associé au deuxième capteur 16C de guerre électronique est configuré pour empêcher la transmission du signal de commande de brouillage radar au deuxième capteur 16C de guerre électronique généré en réponse à la proposition d'envoi du signal de commande de brouillage radar, si la mesure de détection de l'onde électromagnétique radar extérieure est une mesure simulée par le module de simulation 37.

Aucun brouillage radar réel n'est donc lancé si la mesure de détection d'onde électromagnétique radar extérieure est une mesure simulée par le module de simulation 37.

Le module pilote 20C associé au deuxième capteur 16C de guerre électronique est néanmoins configuré pour transmettre le signal de commande de brouillage radar au serveur de scénario tactique 18.

Le serveur de scénario tactique 18 est alors configuré pour prendre en compte le signal de commande de brouillage radar dans la simulation du deuxième capteur 16C de guerre électronique par le module de simulation 37.

En particulier, le serveur de scénario tactique 18 est configuré pour commander le module de simulation 37 pour simuler le lancement d'un brouillage radar, comme commandé par le signal de commande, ainsi que les effets d'un tel lancement sur l'onde électromagnétique radar extérieure.

Par exemple, le module de simulation 37 est configuré, dans un cas où le lancement du brouillage radar simulé est qualifié d'efficace, pour arrêter la mesure simulée de détection de l'onde électromagnétique radar extérieure simulée.

Dans un mode de réalisation avantageux de l'invention, le système d'entrainement 10 est propre à informer ou non le pilote de l'aéronef 12 de la nature réelle ou simulée des pistes de la situation tactique affichée.

Le système d'entrainement 10 présente un mode d'affichage différencié et un mode d'affichage uniforme.

Dans le mode d'affichage différencié, chaque module pilote 20A, 20B, 20C, 20D est configuré pour transmettre, au module de situation tactique 22, chaque signal de mesure émis avec une information représentative du caractère réel ou simulé de la mesure.

Le module de situation tactique 22 est alors configuré pour afficher chaque piste dans la situation tactique en fonction de l'information représentative du caractère réel ou simulé de la mesure de poursuite à partir de laquelle la piste a été déterminée.

Dans le mode d'affichage uniforme, chaque piste est affichée sans distinction du caractère réel ou simulé de la mesure de poursuite à partir de laquelle la piste a été déterminée.

Le module de situation tactique 22 est par exemple configuré pour proposer au pilote de passer d'un des modes d'affichage du système d'entrainement 10 à l'autre, notamment via les moyens de saisie 44.

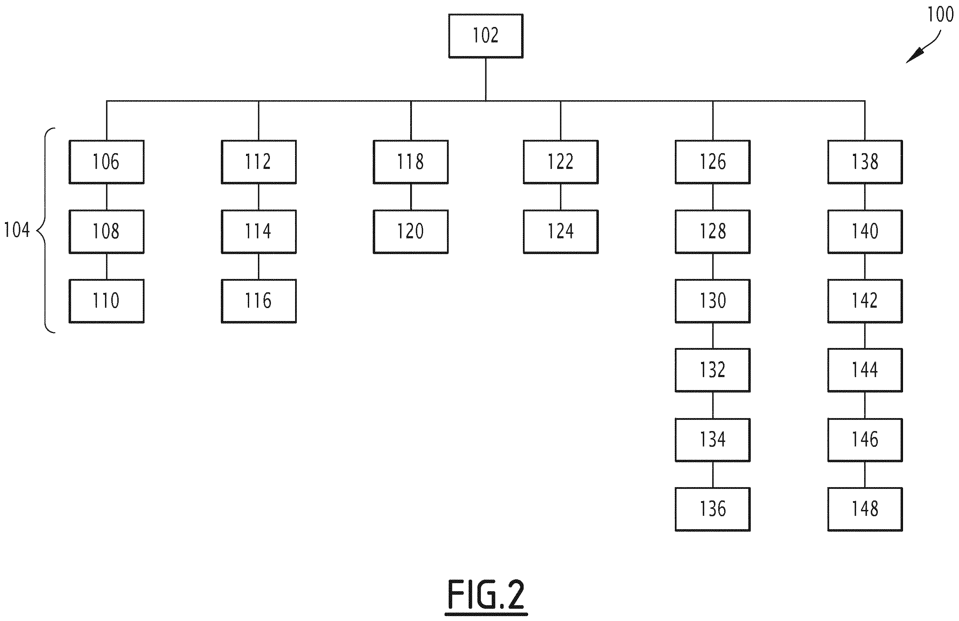

Une méthode 100 d'entrainement de mission d'aéronef 12 en vol va maintenant être décrite, en référence à la figure 2.

La méthode 100 comprend la fourniture 102 du système d'entrainement 10 décrit ci-dessus.

La méthode 100 comprend alors une étape 104 d'entrainement du pilote de l'aéronef 12, mise en œuvre par le système d'entrainement 10.

Au cours de l'entrainement 104, l'aéronef 12 est en vol et piloté par le pilote. Les capteurs de l'aéronef 12 fonctionnent alors de manière nominale.

L'étape d'entrainement 104 comprend ainsi l'émission 106 d'au moins un signal de mesure réelle d'un des capteurs 16A, 16B, 16C, 16D.

Ce signal de mesure réelle est émis en fonction de la situation réelle extérieure rencontrée par l'aéronef 12 au cours de l'entrainement.

Le signal de mesure réelle est reçu (sous-étape 108) par le module de situation tactique 22 par l'intermédiaire du module pilote 20A, 20B, 20C, 20D associé audit capteur 16A, 16B, 16C, 16D.

L'étape d'entrainement 104 comprend alors l'affichage 110 sur l'écran d'affichage 14 de la situation tactique de l'aéronef 12, la situation tactique comprenant une information représentative du signal de mesure réelle dudit capteur, en particulier au moins une piste correspondant à un acteur évoluant sur le terrain.

L'étape d'entrainement 104 comprend aussi la mise en œuvre d'un scénario de simulation par le serveur de scénario tactique 18, par exemple choisi par les scénarios de simulation stockés dans la base de données 36.

Ainsi, de manière simultanée ou séparée de ces sous-étapes d'émission 106, de réception 108 et d'affichage 110, l'étape d'entrainement 104 comprend l'émission 112 d'un signal de mesure simulée du capteur simulé 38A, 38B, 38C, 38D correspondant à au moins un des capteurs 16A, 16B, 16C, 16D, par exemple à celui ayant émis le signal de mesure réelle.

Le signal de mesure simulée du capteur simulé 16A, 16B, 16C, 16D est émis par le module de simulation 37.

Le module de simulation 37 est alors commandé par le serveur de scénario tactique 18 en fonction du ou de chaque scénario de simulation mis en œuvre.

Le signal de mesure simulée du capteur simulé 38A, 38B, 38C, 38D est reçu (sous-étape 114) par le module de situation tactique 22 par l'intermédiaire du même module pilote 20A, 20B, 20C, 20D associé audit capteur.

L'étape d'entrainement 104 comprend alors l'affichage 116 d'une information représentative du signal de mesure simulée dans la situation tactique.

Ces sous-étapes d'émission 106, 112, de réception 108, 114, et d'affichage 110, 116 sont reproduites pour chaque capteur 16A, 16B, 16C, 16D de l'aéronef 12 de manière simultanée ou séparée, notamment en fonction du scénario de simulation choisi.

La situation tactique affichée au pilote est ainsi mise à jour par des données réelles et des données simulées sans que le pilote ne puisse distinguer l'origine réelle ou simulée des pistes, dans le cas du mode d'affichage uniforme du système d'entrainement 10. L'immersion du pilote est grandement favorisée.

De plus, les informations de la situation tactique affichée comprennent une pluralité de pistes, chaque piste étant associée à un acteur extérieur détecté et poursuivi par une mesure réelle ou simulée d'au moins un des capteurs 16A, 16B, 16C, 16D réels ou simulés.

Chaque piste est ainsi déterminée par le module de situation tactique 22 à partir d'au moins un signal de mesure de poursuite d'un des capteurs réel ou simulé.

L'affichage des pistes est géré par le module de situation tactique 22 comme cela a été décrit plus haut.

Comme indiqué plus haut, si le signal de mesure réelle émis est par exemple émis par le capteur radar 16A, le signal de mesure réelle émis est alors par exemple une mesure de détection d'un acteur extérieur, une mesure de poursuite de l'acteur extérieur et/ou une mesure de détection du brouillage radar dans une zone brouillée.

De plus, dans un mode de réalisation préféré de l'invention, lorsque l'étape d'entrainement 104 comprend en outre, par la suite ou simultanément, une sous-étape 118 d'émission d'un signal de mesure réelle de détection d'un brouillage radar réel dans une zone brouillée par le capteur radar 16A, le module pilote 20A associé au capteur radar 16A empêche la transmission (sous-étape 120) d'un signal généré par le module de simulation 37 au module de situation tactique 22, si le signal généré par le module de simulation 37 est un signal de mesure simulée de détection par le capteur radar simulé d'un acteur simulé présentant une position comprise dans la zone brouillée.

En outre, lorsque l'étape d'entrainement 104 comprend aussi, par la suite ou simultanément, une sous-étape 122 d'émission d'un signal de mesure simulée de détection d'un brouillage radar simulé dans une zone brouillée par le capteur radar simulé, le module pilote 20A associé au capteur radar 16A empêche la transmission (sous-étape 124) d'un signal de mesure réelle émis par le capteur radar 16A au module de situation tactique 22, si le signal émis par le capteur radar 16A est un signal de mesure réelle de détection ou de poursuite par le capteur radar 16A d'un acteur réel présentant une position comprise dans la zone brouillée.

Comme indiqué plus haut, si le signal de mesure réelle émis est par exemple émis par le premier capteur de guerre électronique 16B, le signal de mesure réelle émis est alors par exemple une mesure de détection et/ou une mesure de poursuite d'une arme dirigée vers l'aéronef 12.

De plus, dans un mode de réalisation préféré de l'invention, lorsque l'étape d'entrainement 104 comprend en outre, par la suite ou simultanément, une sous-étape 126 d'émission d'un signal de mesure réelle ou simulée de détection et/ou de poursuite d'une arme dirigée vers l'aéronef 12, l'entrainement 104 comprend une sous-étape 128 de proposition au pilote d'envoyer un signal de commande de leurre.

Cette proposition 128 est par exemple mise en œuvre par le module de situation tactique 22.

Le signal de commande de leurre est généré (sous-étape 130), en fonction de la réponse du pilote à ladite proposition.

Alors, le module pilote 20B associé au premier capteur de guerre électronique 16B empêche la transmission (sous-étape 132) du signal de commande de leurre au premier capteur de guerre électronique 16B généré en réponse à la proposition, si la mesure de détection de l'arme dirigée vers l'aéronef 12 est une mesure simulée par le module de simulation 37.

Aucun leurre réel n'est donc lancé si la mesure de détection de l'arme dirigée vers l'aéronef 12 est une mesure simulée par le module de simulation 37.

Le module pilote 20B transmet néanmoins (sous-étape 134) le signal de commande de leurre au serveur de scénario tactique 18.

Le serveur de scénario tactique 18 prend alors en compte (sous-étape 136) le signal de commande de leurre dans la simulation du premier capteur de guerre électronique 16B par le module de simulation 37.

Comme indiqué plus haut, si le signal de mesure réelle émis est par exemple émis par le deuxième capteur 16C de guerre électronique, le signal de mesure réelle émis est alors par exemple une mesure de détection d'une onde électromagnétique radar extérieure dirigée vers l'aéronef 12, provenant par exemple d'un système radar extérieur, qui équipe par exemple une structure ou un aéronef extérieur(e).

De plus, dans un mode de réalisation préféré de l'invention, lorsque l'étape d'entrainement 104 comprend en outre, par la suite ou simultanément, une sous-étape 138 d'émission d'un signal de mesure réelle ou simulée de détection d'onde électromagnétique radar extérieure dirigée vers l'aéronef 12, l'entrainement 104 comprend une sous-étape 140 de proposition au pilote d'envoyer un signal de commande de brouillage radar.

Cette proposition 140 est par exemple mise en œuvre par le module de situation tactique 22.

Le signal de commande de brouillage radar est généré (sous-étape 142), en fonction de la réponse du pilote à ladite proposition.

Alors, le module pilote 20C associé au deuxième capteur 16C de guerre électronique empêche la transmission (sous-étape 144) du signal de commande de brouillage radar au deuxième capteur 16C de guerre électronique généré en réponse à la proposition d'envoi du signal de commande de brouillage radar, si la mesure de détection de l'onde électromagnétique radar extérieure est une mesure simulée par le module de simulation 37.

Aucun brouillage radar réel n'est donc lancé si la mesure de détection d'onde électromagnétique radar extérieure est une mesure simulée par le module de simulation 37.

Le module pilote 20C associé au deuxième capteur 16C de guerre électronique transmet néanmoins (sous-étape 146) le signal de commande de brouillage radar au serveur de scénario tactique 18.

Le serveur de scénario tactique 18 prend en compte (sous-étape 148) le signal de commande de brouillage radar dans la simulation du deuxième capteur 16C de guerre électronique par le module de simulation 37.

Grâce aux caractéristiques décrites ci-dessus, le système d'entrainement 10 selon l'invention n'a pas d'impact sur le reste de l'aéronef 12, une fois les modules pilotes 20A, 20B, 20C, 20D configurés et connectés à l'unité de traitement 23, et en particulier au serveur de scénario tactique 18.

Le système d'entrainement 10 selon l'invention autorise en plus une évolution maitrisée de l'entrainement, en particulier de sa difficulté.

Le système d'entrainement 10 permet donc de faciliter l'entrainement d'un pilote à mener des missions de combat, en limitant les coûts associés à cet entrainement et en augmentant la sécurité.

## Revendications

1. Système d'entrainement (10) à une mission d'aéronef en vol comprenant :
- un aéronef (12) comprenant un écran d'affichage (14) et une pluralité de capteurs (16A, 16B, 16C, 16D), chaque capteur étant configuré pour émettre un signal de mesure réelle dudit capteur ;
- un module de situation tactique (22) configuré pour afficher sur l'écran d'affichage (14) une situation tactique de l'aéronef (12), la situation tactique comprenant une information représentative du signal de mesure réelle émis par au moins un des capteurs (16A, 16B, 16C, 16D) ; et
- une pluralité de modules pilotes (20A, 20B, 20C, 20D), chaque module pilote (20A, 20B, 20C, 20D) étant associé à un des capteurs (16A, 16B, 16C, 16D) et étant configuré pour assurer une communication entre le capteur associé et le module de situation tactique (22), le module de situation tactique (22) étant configuré pour recevoir le signal de mesure réelle de chaque capteur par l'intermédiaire du module pilote (20A, 20B, 20C, 20D) associé audit capteur ;
**caractérisé en ce que** le système d'entrainement (10) comprend en outre un serveur de scénario tactique (18) et un module de simulation (37), le serveur de scénario tactique (18) étant configuré pour commander le module de simulation (37) pour engendrer par simulation un capteur simulé correspondant à au moins un des capteurs et pour générer un signal de mesure simulée du capteur simulé, le module de situation tactique (22) étant configuré pour recevoir ledit signal de mesure simulée, par l'intermédiaire du module pilote (20A, 20B, 20C, 20D) associé audit capteur, et pour afficher une information représentative du signal de mesure simulée dans la situation tactique.

2. Système d'entrainement (10) selon la revendication 1, dans lequel chaque module pilote (20A, 20B, 20C, 20D) est un module nécessaire au capteur associé (16A, 16B, 16C, 16D) et au module de situation tactique (22) pour mettre en œuvre la transmission d'un signal de mesure réel entre le capteur associé et le module de situation tactique (22).

3. Système d'entrainement (10) selon l'une quelconque des revendications 1 ou 2, dans lequel un des capteurs est un capteur radar (16A), une mesure du capteur radar (16A) étant une mesure de détection d'un acteur extérieur, une mesure de poursuite de l'acteur extérieur et/ou une mesure de détection d'un brouillage radar dans une zone brouillée ; le module de simulation (37) étant configuré pour engendrer par simulation un capteur radar simulé (38A) correspondant au capteur radar (16A) ; et, dans lequel :
- lorsque le module pilote associé au capteur radar (16A) reçoit du capteur radar (16A) un signal de mesure réelle de détection d'un brouillage radar réel dans une zone brouillée, le module pilote (20A) associé au capteur radar (16A) est configuré pour empêcher la transmission d'un signal généré par le module de simulation (37) au module de situation tactique (22), si le signal généré par le module de simulation (37) est un signal de mesure simulée de détection ou de poursuite par le capteur radar simulé (38A) d'un acteur simulé présentant une position comprise dans la zone brouillée ; et/ou
- lorsque le module pilote (20A) associé au capteur radar (16A) reçoit du module de simulation (37) un signal de mesure simulée de détection d'un brouillage radar simulé dans une zone brouillée par le capteur radar simulé (38A), le module pilote (20A) associé au capteur radar (16A) est configuré pour empêcher la transmission d'un signal émis par le capteur radar (16A) au module de situation tactique (22), si le signal émis par le capteur radar (16A) est un signal de mesure réelle de détection par le capteur radar (16A) d'un acteur réel présentant une position comprise dans la zone brouillée.

4. Système d'entrainement (10) selon l'une quelconque des revendications 1 à 3, dans lequel un des capteurs est un capteur de guerre électronique (16B), une mesure du capteur de guerre électronique (16B) étant une mesure de détection et/ou de poursuite d'une arme dirigée vers l'aéronef (12), le capteur de guerre électronique (16B) étant aussi configuré pour commander le lancement d'un leurre en fonction d'un signal de commande de leurre déclenché par un pilote de l'aéronef (12), le module de simulation (37) étant configuré pour engendrer par simulation un capteur de guerre électronique simulé (38B) correspondant au capteur de guerre électronique (16B) ;
le module de situation tactique (22) étant configuré pour proposer au pilote d'envoyer le signal de commande de leurre, lorsque le module pilote (20B) associé au capteur de guerre électronique (16B) reçoit un signal de mesure réelle ou simulée de détection d'une arme dirigée vers l'aéronef (12) ;
le module pilote (20B) associé au capteur de guerre électronique (16B) étant configuré pour empêcher la transmission du signal de commande de leurre au capteur de guerre électronique (16B) généré en réponse à la proposition d'envoi du signal de commande de leurre, si la mesure de détection de l'arme dirigée vers l'aéronef (12) est une mesure simulée par le module de simulation (37).

5. Système d'entrainement (10) selon l'une quelconque des revendications 1 à 4, dans lequel un des capteurs est un capteur de guerre électronique (16C), une mesure du capteur de guerre électronique (16C) étant une mesure de détection d'une onde électromagnétique radar extérieure dirigée vers l'aéronef (12), le capteur de guerre électronique (16C) étant aussi configuré pour commander le lancement d'un brouillage radar en fonction d'un signal de commande de brouillage radar déclenché par un pilote de l'aéronef (12), le module de simulation (37) étant configuré pour engendrer par simulation un capteur de guerre électronique simulé (38C) correspondant au capteur de guerre électronique (16C) ;
le module de situation tactique (22) étant configuré pour proposer au pilote d'envoyer le signal de commande de brouillage radar, lorsque le module pilote (20C) associé au capteur de guerre électronique (16C) reçoit un signal de mesure réelle ou simulée de détection d'onde électromagnétique radar extérieure dirigée vers l'aéronef (12) ;
le module pilote (20C) associé au capteur de guerre électronique (16C) étant configuré pour empêcher la transmission du signal de commande de brouillage radar au capteur de guerre électronique (16C) généré en réponse à la proposition d'envoi du signal de commande de brouillage radar, si la mesure de détection de l'onde électromagnétique radar extérieure est une mesure simulée par le module de simulation (37).

6. Système d'entrainement (10) selon l'une quelconque des revendications 1 à 5, dans lequel les informations de la situation tactique affichée comprennent une pluralité de pistes, chaque piste étant associée à un acteur extérieur poursuivi, chaque piste étant déterminée à partir d'au moins un signal de mesure réelle ou simulée de poursuite d'un des capteurs (16A, 16D) réels ou simulés (38A, 38D),
le module pilote (20A, 20D) dudit capteur réel (16A, 16D) étant configuré pour transmettre au module de situation tactique (22) chaque signal de mesure réelle ou simulée de poursuite correspondant à des acteurs réels ou simulés différents,
ledit capteur réel (16A, 16D) étant propre à poursuivre un nombre maximal prédéterminé d'acteurs extérieurs seulement,
le module pilote (20A, 20D) dudit capteur réel (16A, 16D) étant aussi configuré pour arrêter la transmission d'un signal de mesure de poursuite réelle ou simulée, choisi parmi les signaux de poursuite transmis au module de situation tactique (22) par le module pilote (20A, 20D), lorsque la somme du nombre des acteurs extérieurs poursuivis par le capteur réel (16A, 16D) et du nombre des acteurs extérieurs poursuivis par le capteur simulé (38A, 38D) est égal au nombre maximal prédéterminé et lorsque le module pilote (20A, 20D) reçoit un signal de mesure réelle ou simulée de poursuite d'un nouvel acteur extérieur,
le module pilote (20A, 20D) étant alors configuré pour transmettre un signal de mesure de poursuite associé au nouvel acteur extérieur poursuivi à la place.

7. Système d'entrainement (10) selon la revendication 6, dans lequel ledit module pilote (20A, 20D) est configuré pour établir une relation d'ordre entre chaque acteur extérieur poursuivi par le capteur réel (16A, 16D) ou par le capteur simulé (38A, 38D), la relation d'ordre étant basée sur un attribut associé à chaque acteur extérieur poursuivi,
le signal de mesure de poursuite choisi, dont la transmission est arrêté par le module pilote (20A, 20D), étant le signal de mesure de poursuite de l'acteur extérieur qui présente l'attribut d'ordre le plus bas parmi les acteurs poursuivis par le capteur réel (16A, 16D) ou simulé (38A, 38D) du module pilote (20A, 20D), et qui vérifie en outre une condition prédéterminée d'arrêt de transmission.

8. Système d'entrainement (10) selon la revendication 7, dans lequel l'attribut est une information chronologique représentative de l'instant de détection réelle ou simulée de l'acteur extérieur associé.

9. Système d'entrainement (10) selon l'une des revendications 7 ou 8, dans lequel, pour chaque acteur extérieur réel ou simulé poursuivi, la condition prédéterminée d'arrêt de transmission est vérifiée si l'acteur extérieur est situé au-delà d'une distance seuil de sécurité par rapport à l'aéronef (12).

10. Système d'entrainement (10) selon l'une quelconque des revendications 1 à 9, dans lequel les informations de la situation tactique affichée comprennent une pluralité de pistes, chaque piste étant associée à un acteur extérieur détecté et poursuivi par une mesure réelle ou simulée d'un des capteurs (16A, 16D) réels ou simulés ;
ledit capteur présentant une vitesse de balayage, la vitesse de balayage dépendant du nombre d'acteurs extérieurs réels détectés et poursuivis par le capteur ; et
le module de situation tactique (22) étant configuré pour afficher chaque piste en fonction d'une vitesse adaptée de balayage associée au capteur, la vitesse adaptée de balayage dépendant du nombre d'acteurs extérieurs réels détectés et poursuivis par ledit capteur et du nombre d'acteurs extérieurs simulés détectés et poursuivis par ledit capteur simulé par le module de simulation (37).

11. Système d'entrainement (10) selon la revendication 10, dans lequel le module pilote associé audit capteur est configuré pour calculer ladite vitesse adaptée de balayage associée au capteur.

12. Système d'entrainement (10) selon l'une quelconque des revendications 1 à 11, dans lequel au moins un des capteurs (16A, 16D) présente un domaine de balayage, le domaine de balayage étant une zone telle qu'un acteur extérieur disposé en dehors du domaine de balayage ne peut être détecté ou poursuivi par le capteur ;
le module pilote (20A, 20D) associé audit capteur étant configuré pour empêcher la transmission d'un signal généré par le module de simulation (37) au module de situation tactique (22), si le signal généré par le module de simulation (37) est un signal de mesure simulée de détection ou de poursuite par le capteur simulé (38A, 38D) d'un acteur simulé présentant une position extérieure au domaine de balayage.

13. Système d'entrainement (10) selon l'une quelconque des revendications 1 à 12, dans lequel au moins un des capteurs (16A, 16D) présente une direction de visée ;
le module de situation tactique (22) étant configuré pour générer un signal de commande de visée du capteur, le signal de commande de visée étant propre à commander une nouvelle direction de visée du capteur ;
le module pilote (20A, 20D) associé au capteur (16A, 16D) étant configuré pour transmettre le signal de commande de visée audit capteur (16A, 16D) et au serveur de scénario tactique (18), le serveur de scénario tactique (18) étant configuré pour commander le module de simulation (37) pour simuler le capteur (38A, 38D) avec la nouvelle direction de visée.

14. Méthode (100) d'entrainement de mission d'aéronef en vol comprenant les étapes suivantes :
- fourniture (102) d'un système d'entrainement (10) à une mission d'aéronef en vol (12) selon l'une quelconque des revendications précédentes ; et
- entrainement (104) du pilote, l'étape (104) d'entrainement comprenant les sous-étapes suivantes :
* d'une part, émission (106) d'un signal de mesure réelle d'au moins un des capteurs (16A, 16B, 16C, 16D), réception (108) du signal par le module de situation tactique (22) par l'intermédiaire du module pilote (20A, 20B, 20C, 20D) associé audit capteur, et affichage (110) sur l'écran d'affichage (14) d'une situation tactique de l'aéronef (12), la situation tactique comprenant une information représentative du signal de mesure réelle dudit capteur ; et
* d'autre part, simultanément ou séparément des sous-étapes d'émission (106) du signal de mesure réelle, de réception (108) du signal de mesure réelle et d'affichage (110) de la situation tactique, émission (112) d'un signal de mesure simulée du capteur simulé correspondant audit capteur, réception (114) du signal de mesure simulée par le module de situation tactique (22) par l'intermédiaire du même module pilote (20A, 20B, 20C, 20D) associé audit capteur, et affichage (116) d'une information représentative du signal de mesure simulée dans la situation tactique.
